# EUROPEAN PATENT APPLICATION

(11) **EP 4 293 477 A1**
(43) Date of publication of application: **20.12.2023**
(21) Application number: 23178728.4
(22) Date of filing: 12.06.2023
(51) Int. Cl.: G06F 1/16, A63B 71/06

(54) **DATA STORAGE DEVICE FOR SPORTING EVENTS**

(30) Priority: 13.06.2022 IT 202200012488
(71) Applicant: Picotronik S.r.l., 41037 Mirandola (MO) (IT); Se.Al S.n.c., 41037 Mirandola (MO) (IT)
(72) Inventor: Dotti, Luca, 41037 Mirandola (MO) (IT); Zeni, Sergio, 41037 Mirandola (MO) (IT)
(74) Representative: Bottino, Giovanni

(57) **Abstract**

Data storage device (1) for sporting events, which sporting events include two opposing teams or two opposing players.

The device comprises an external box, of parallelepiped shape, which box has a first (100) and a second (101) face arranged on two planes parallel to each other, having a greater surface than the other faces of said box.

Furthermore, said device (1) comprises an input/output interface, a processing unit (31), a memory unit (30) and a power supply battery (32).

Said input/output interface comprises two touch-screen displays (10, 11) arranged on said first face (100), the two touch-screen displays (10, 11) being configured to display an alphanumeric keypad in order to allow data to be entered by a user into the memory unit (30), each touch-screen display (10, 11) being associated with a team or a player.

## Description

The present invention relates to a data storage device for sporting events, which sporting events include two opposing teams or two opposing players.

The device comprises an external box, of parallelepiped shape, which box has a first and a second face arranged on two planes parallel to each other, having a greater surface than the other faces of the external box.

The device further comprises an input/output interface, a processing unit, a memory unit and a power supply battery.

This device is aimed in particular at referees of sporting matches, preferably of team sports, who, in addition to managing the different players, must note all the events that occurred during the match.

In sporting matches, both professional and amateur ones, the referee is responsible for noting, in addition to the formations deployed in the pitch, any replacements, warnings, expulsions, points scored, etc., associating to each of these events, the minute at which they occurred.

Currently, the referee notes all these events on a paper notebook, as the referee's equipment currently includes a whistle, to interrupt/resume the play, one or more cards to warn/expel players and the paper notebook on which he notes all the events with a pen.

It is evident that this configuration is particularly inefficient, since the manual annotation on a paper notebook, in addition to requiring long times, can be subject to writing errors or difficult calligraphic interpretation.

In addition, once the match is over, all data must be transformed from paper to digital format, so as to allow a subsequent use thereof and a corresponding storage.

Despite the important use of technology in the sports field, just think for example of VAR and other technologies for evaluating the correct positioning of the ball during an action, as well as of the technologies for detecting the speed of movement of the players and of the ball, the instrumentation possessed by the referee is exclusively of the manual type, so that the annotation of the various events is a significant burden, both in terms of time and precision, exclusively on the referee and, in part, on his collaborators.

There is therefore a need not met by the devices known in the state of the art, to solve the disadvantages set out above, in particular to realize a device that allows a quick and effective annotation of the events that occurred during a sporting match, allowing an easy and correct storage thereof.

The present invention achieves the above objects by realizing a device as described above, wherein the input/output interface comprises two touch-screen displays arranged on the first face.

The touch-screen displays are configured to display an alphanumeric keypad in order to allow data to be entered by a user inside the memory unit.

In particular, each display is associated with a team of the two opposing teams or a player of the two opposing players.

An electronic, portable device is therefore realized, which allows the user, in particular the referee, to enter quickly, effectively and without further interpretation all the events of the sporting match.

Simply by typing on the keypad on the touch-screen display, the referee can digitally note scores, goals, goal scorers, replacements, warnings, minutes of recovery, etc., and realize an electronic notebook that contains all the events of the game and that can be easily shared at the end of the game, without the risk of requiring interpretations of the referee's writing.

Unlike the systems and the methods known in the state of the art, therefore, this device realizes a portable device that allows to transcribe and store electronically information of a sporting event that at the moment are written and stored in paper mode with manual archiving and susceptible to writing errors or difficult calligraphic interpretation.

The digitization of the notebook does not only allow to avoid problems of interpreting the writing and of sharing information.

In fact, one of the most advantageous aspects of the device subject-matter of the present invention is the speed of data entry.

In fact, the referee must only type simple indications on a display to generate a series of information to be memorized relating to the events of the match.

For example, it will be sufficient to type some keywords, such as for example the player's name (or number), the event, for example the goal, warning, replacement, to record what happened during the match.

The presence of electronic components, like the processing unit and the touch-screen displays can also generate automatic operating dynamics.

First of all, the presence of two touch-screen displays, arranged on the same face, allows the referee to activate one or the other display based on the team whose data are to be updated, simplifying the memorization of the data itself.

The referee touches one of the two displays and the device already knows the team with which to associate the event that is being reported.

Thereafter the referee can choose an action, replacement, warning/expulsion, goal, etc., even without typing, but simply by selecting keywords that can be suggested by the activated touch-screen display.

Before or after the described step, the referee selects the number or the name of the player to be reported and possibly the minute at which the event to be recorded occurred.

Advantageously, the memory unit also contains the lists of the teams that are competing, so it will only be necessary to select the number of the player, so that the processing unit associates the name of the player with the number, using the list present in the memory unit.

Starting from this general concept, the further variants of the device subject-matter of the present invention are aimed at improving the automation of data storage.

For example, it is possible to provide that the device subject-matter of the present invention, in addition to replacing the paper notebook of the referee, also replaces the stopwatch, providing for time measurement means.

In addition to the simple replacement of the stopwatch, the presence of the time measurement means allows to automatically associate the event that it is wished to be recorded also with the precise minute at which it occurred, that is the minute when the referee activates one of the two displays, without the need for the referee to report the minutes.

Also with the aim of reducing the equipment of the referee, it is possible to envisage that the second face, that is the face opposite the face with the displays, has a coloured, yellow or red portion, so as to be able to replace, respectively, the yellow or red card of the referee.

In fact, the device subject-matter of the present invention preferably has the typical dimensions of the cards supplied to the referees.

In combination with this configuration, the presence of an accelerometer is particularly advantageous, which allows to measure the movements and the speed of the movements of the device subject-matter of the present invention.

Advantageously, the processing unit is configured to process the information detected by the accelerometer so as to associate the displacement performed by the device with a certain gesture of a user.

In particular, the processing unit is configured to detect the speed of the movement of the device subject-matter of the present invention.

In case of warning or expulsion, the referee performs a precise movement, that is, he extracts the card from the pocket and brings it over his head, so as to make it visible to the player.

It is therefore possible to associate with this gesture, that is, the extraction of the yellow or red card a certain speed, that is, a certain acceleration.

In the event that the card is replaced by the device subject-matter of the present invention, the movement remains the same.

This movement is detected by the accelerometer and the processing of the data detected by the accelerometer will allow to identify that the referee is performing a warning or an expulsion, based on the colour associated with the second face of the device.

In this case, the annotation of the warning or expulsion will be further automated, so that the referee merely indicates on one of the two displays the number of the player that has been warned or expelled.

The card extraction gesture is then associated with a certain acceleration detected by the accelerometer, so as to suggest to the referee, once one or both displays are activated, the warning or the expulsion of a player.

Generally, the accelerometers present in the devices known in the state of the art are aimed at detecting the movement of the devices, but not at associating the movement of the device with a certain gesture performed by the referee.

In view of the characteristics described above, preferably, the second face of the device subject-matter of the present invention is coloured in yellow.

In fact, the yellow card is more frequently used and it is advantageous that the warning annotation is automated.

In addition, since the red card can correspond to the sum of two yellow cards, the device can automatically indicate the expulsion following a warning that occurred against a player already warned.

Advantageously, the power supply battery is a rechargeable type battery.

According to a particular embodiment, the battery belonging to the device subject-matter of the present invention comprises charging circuits configured to allow a charging thereof in wireless mode, i.e. a wireless charging.

Like in the devices known in the state of the art that use rechargeable batteries, the device subject-matter of the present invention also has all the charging circuits integrated inside special electronic boards and communicating with the battery of the device itself.

It is possible to provide any technology known in the state of the art to recharge the battery, such as for example charging through the connection of an electric charging cable, or wireless charging.

Such technologies may be envisaged as an alternative or in combination.

Since the device must guarantee the operation during the entire sporting event, but at the same time it must feature characteristics of lightness, the power supply battery, which corresponds to the heaviest component, must have a limited weight.

It follows that all the components of the device subject-matter of the present invention must have characteristics that limit energy consumption.

For this reason, the displays, which are the component that requires the most energy, consist of monochrome screens of the OLED type.

Finally, in order to further automate the data storage procedure, it is possible to provide that the input/output interface comprises means for acquiring voice commands and means for converting said voice commands into data to be memorized.

In this case the memory unit comprises databases with associative tables, aimed at associating with specific sounds, keywords, such as for example "warning", "expulsion", "goal", "replacement" or numbers of players or the like, the corresponding digital data.

The referee must simply activate the display, in order to identify the team to which to associate the event, and dictate to the acquisition means the event to be recorded, for example "warning number 10", or "replacement number 5 with number 14": the device will record inside the memory unit the minute at which the number 10 of the specific team has been warned, or the minute at which the number 5 of the specific team has been replaced with the number 14.

Based on the characteristics described so far, it is evident how the device subject-matter of the present invention presents all the characteristics necessary to convey the recorded information through the device itself, not only to the referee, but also to a possible audience.

In this perspective it is possible to provide a system with one or more display units that communicate in wireless mode, for example through radio waves, to the device subject-matter of the present invention.

The display units can be of any dimension and in any number, and are positioned in a point of the pitch that makes them easily visible to the audience.

The information to be displayed can also be established, whether it is information recorded in real time, such as for example warnings or goals, or information relating to the list and to the players present.

Finally, it is possible to provide a software architecture aimed at programming the information to be displayed, also through specific animations and display times.

These and further objects of the present invention are achieved by a data storage device for sporting events according to the appended independent claim and the sub-claims.

Optional features of the device of the invention are contained in the appended dependent claims, which form an integral part of the present disclosure.

These and other features and advantages of the present invention will become clearer from the following disclosure of some embodiment examples illustrated in the accompanying drawings in which:
figures 1a and 1b illustrate two views of a possible embodiment of the device subject-matter of the present invention, in particular a view of the first face and of the second face, according to an exemplary diagram;
figure 2 illustrates a section of the device subject-matter of the present invention, according to a plane parallel to the first face and according to a functional block diagram.

It is specified that the figures enclosed to this patent application illustrate only some possible embodiments of the device subject-matter of this invention, to better understand the advantages and characteristics described.

Such embodiments are therefore to be understood as purely illustrative and not limiting the inventive concept of the present invention, i.e. that of making a portable device with battery that allows transcribing and digitally storing information of a sporting event, in a fast and easy way with the possibility of sharing them electronically with further devices.

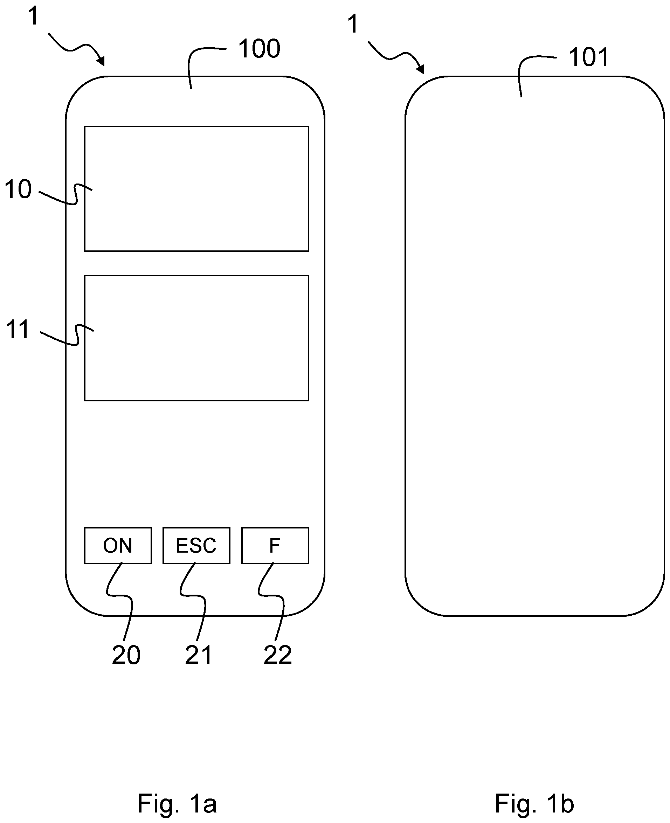

With particular reference to figures 1a to 2, some views, through exemplary diagrams, of a possible embodiment of the data storage device for sporting events, which sporting events include two opposing teams or two opposing players, are illustrated.

In particular, the device 1 comprises an external box, of parallelepiped shape, having a first 100 and a second 101 face.

The first face 100 constitutes the front face of the device, while the second face 101 constitutes the rear face of the device.

Both sides 100 and 101 are therefore arranged on two planes parallel to each other and have larger surfaces than the other sides of the case.

It is specified that in the figures, only the first 100 and the second face 101 are illustrated, but, since it has a parallelepiped shape, the device 1 has a further four faces, constituting the side walls of the device 1, of smaller surface and constituting the thickness of the device 1.

The device 1 must have shapes and dimensions comparable to the cards known in the state of the art, so it has a very limited thickness with respect to the width and to the length of the face 100 and of the face 101.

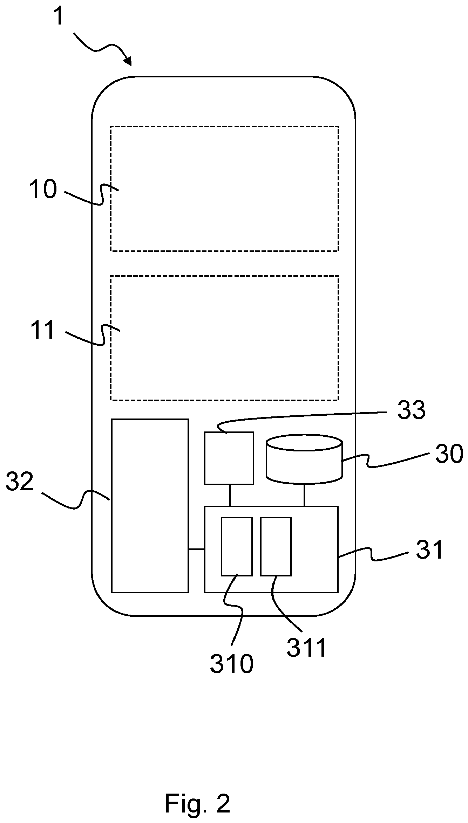

As anticipated, the device 1 consists of a portable electronic device, whereby it has some electronic components necessary for operation, illustrated, through a functional block diagram, in the section of figure 2.

Given the limited thickness dimensions of the device 1, these electronic components will be integrated into the common electronic boards (PCB Printed Control Board) known in the state of the art, which have a thickness of a few millimetres.

With particular reference to figure 2, the device 1 comprises a processing unit 31, a memory unit 30 and a power supply battery 32.

The power supply battery 32 is preferably constituted by a rechargeable battery, whereby the device 1 has all the circuits (not illustrated) necessary for recharging the battery, like in the common rechargeable devices known in the state of the art.

The processing unit 31 is also constituted by a common CPU known in the state of the art, connected to the power supply battery 32 and to the memory unit 30.

The memory unit 30 is configured to save the data that are entered by a user, in the specific case a referee, through the input/output interface, which will be described later.

Further, as anticipated, the memory unit 30 may contain databases containing keywords relating to sporting events, such as for example "warning," "expulsion," "replacement", or the like, so as to facilitate, as described, the entry of data by the referee.

In fact, once one of the two touch-screen displays is activated, it is possible that the processing unit, by communicating with the databases present in the memory unit, suggests to the referee one or more actions, displaying the actions themselves on the display.

It is possible to provide for the memory unit to memorize the most frequent actions, such as for example warning, goal, or replacement, within the database in order to prioritize the display of those actions.

Advantageously, the device 1 has a reception/transmission unit 33 configured for the exchange of data with further devices.

The reception/transmission unit 33 can be realized according to any one of the modes known in the state of the art, but it preferably consists of a Bluetooth module for the transmission/reception of the data in wireless mode.

The connection of the device 1 to other devices allows the data to be exchanged between the various devices, for example it makes it possible to enter the lists of the teams inside the memory unit 30, in case they are already available on other devices.

In addition, the transmission/reception unit allows to update the firmware, downloadable from specific sites present online, via Bluetooth connection, to adapt to the changes in sports regulations.

As discussed above, the referee can enter the data relating to the events of the sporting event through a special input/output interface.

In the variant illustrated in the figures, said input/output interface comprises two touch-screen displays 10 and 11 arranged on the first face 100.

The two touch-screen displays 10 and 11 are configured to display an alphanumeric keypad in order to allow data to be entered by the referee inside the memory unit 30.

As anticipated, the touch-screen display 10 is associated with a team (or a player), while the touch-screen display 11 is associated with the challenging team (or the challenging player).

It follows that the referee will simply activate, for example by a touch, the touch-screen display 10 and the system will expect to receive information that will be saved and associated with the team associated with the touch-screen display 10.

The same procedure will take place for the touch-screen display 11.

It is also possible to provide that the device 1 has a time measurement unit 310, so that the device 1 also acts as a stopwatch for the referee, as well as for recording events.

The unit 310 may be integrated within the processing unit 31, or within the PCT of the device 1.

For example, it is assumed the case where the player John Doe, number 9 of the team associated with the touch-screen display 10, scores a goal at minute 30 of the first half.

The referee whistles and validates the goal.

Upon validation of the goal, the referee extracts the device 1, activates the touch-screen display 10 and types the word "goal", indicating John Doe, number 9.

The processing unit 31 processes these data and memorizes inside the memory unit that John Doe, number 9 of the specific team scored a goal.

The referee may either report the minute of the goal, or, preferably, the time measurement unit 310 will automatically save the minute at which the goal occurred.

Similarly, in the case of the presence of the team lists within the memory unit 30, it will be sufficient for the referee to indicate the number 9 and this number will be uniquely associated with the player John Doe.

Based on the latter configuration, the referee will only have to type the word "goal" and the player's number.

Alternatively, it is possible for the referee to select an activity to be recorded, in this case the activity "goal", by selecting it from a list of activities proposed on the activated touch-screen display and present within the memory unit 30.

As anticipated, the touch-screen displays 10 and 11 preferably consist of monochrome OLED displays.

The external box of the device 1 can be made of any of the materials known in the state of the art, but preferably, for reasons of ease of production and lightness, it consists of plastic material.

Advantageously, the external box is made in such a way as to present a degree of protection IP65, i.e. a protection against water jets from all directions.

Regardless of the material used, advantageously the second face 101, illustrated in figure 1b, has at least one portion coloured in yellow or red.

Since the second face 101 must replace the yellow card or the red card of the referee and must therefore be visible to the players, preferably most of the area of the second face 101 is coloured in yellow or red.

Precisely because it must replace the cards known in the state of the art, the first 100 and the second 101 face have a length with dimensions comprised between 6 centimetres and 15 centimetres and a width with dimensions comprised between 5 centimetres and 10 centimetres.

Furthermore, according to the variant illustrated in figure 2, the device 1 has an accelerometer 311, configured to detect the movements, as well as the speed of the movements of the device 1.

The data collected by the accelerometer 311 are then processed by the processing unit 31, whereby it is possible to provide that the accelerometer 311 is integrated within the processing unit 31.

Finally, with particular reference to figure 1a, the input/output interface has a plurality of keys, arranged on the first face 100.

In particular, there are three physical keys 20, 21 and 22, configured to set the operating modes of the device 1.

Advantageously, the functions performed by the three keys 20, 21 and 22 can vary and be set either through the device 1 itself, or through further devices connected to the device 1 subject-matter of the present invention.

It is evident how it is possible to envisage the most disparate functions that can be activated through the physical keys 20, 21 and 22.

By way of example and with particular reference to figure 1a, the key 20 allows switching on/off the device 1, the key 21 to exit the screen display shown on the touch-screen displays 10 0 11, while the key 22 could cancel the last saving made, in case of error.

A possible alternative, particularly functional, could be related to the fact that the key 22 allows to activate/deactivate a further stopwatch, so that the referee can operate the key 22 every time the game stops, in order to detect, at the end of the game, the actual minutes played.

According to a possible embodiment, one or all three keys may provide a feedback to the user of the haptic type, preferably vibrating, in case they are activated.

Finally, it is possible to provide that the processing unit is configured to set an automatic disabling of the physical keys.

While the invention is susceptible to various modifications and alternative constructions, some preferred embodiments have been shown in the drawings and described in detail.

It should be understood, however, that there is no intention to limit the invention to the specific illustrated embodiment but, on the contrary, the aim is to cover all the modifications, alternative constructions and equivalents falling within the scope of the invention as defined in the claims.

The use of "for example", "etc.", "or" indicates non-exclusive alternatives without limitation, unless otherwise indicated.

The use of "includes" means "includes but is not limited to", unless otherwise stated.

## Claims

1. Data storage device (1) for sporting events, which sporting events include two opposing teams or two opposing players,
the device comprising an external box, of parallelepiped shape, which box has a first (100) and a second (101) face arranged on two planes parallel to each other, having a greater surface than the other faces of said box,
said device (1) comprising an input/output interface, a processing unit (31), a memory unit (30) and a power supply battery (32),
**characterized in that**
said input/output interface comprises two touch-screen displays (10, 11) arranged on said first face (100), the two touch-screen displays (10, 11) being configured to display an alphanumeric keypad in order to allow data to be entered by a user into the memory unit (30),
each touch-screen display (10, 11) being associated with a team or a player.

2. Device according to claim 1, wherein the two touch-screen displays (10, 11) consist of monochrome OLED displays.

3. Device according to claim 1 or claim 2, wherein said device comprises an accelerometer (311) positioned inside said external box.

4. Device according to claim 3, wherein said processing unit (31) is configured to process the information detected by the accelerometer so as to associate the performed displacement of the device with a certain gesture of a user.

5. Device according to one or more of the preceding claims, wherein time measurement means (310) are present.

6. Device according to one or more of the preceding claims, wherein said second face (101) has at least one portion coloured in yellow or red.

7. Device according to one or more of the preceding claims, wherein said first (100) and said second (101) face have a length with dimensions comprised between 6 centimetres and 12 centimetres and a width with dimensions comprised between 5 centimetres and 10 centimetres.

8. Device according to one or more of the preceding claims, wherein the first face (100) comprises one or more keys (20, 21, 22) configured to set the operating modes of the device (1).

9. Device according to one or more of the preceding claims, wherein a reception/transmission unit (33) is present.

10. Device according to claim 9, wherein said reception/transmission unit (33) comprises a wireless reception/transmission module.

11. Device according to one or more of the preceding claims, wherein said input/output interface comprises means for acquiring voice commands and means for converting said voice commands configured for converting said voice commands into data to be memorized within the memory unit.
